(19) Europäisches Patentamt
European Patent Office
Office européen des brevets

(11) Veröffentlichungsnummer: **0 444 282 B1**

(12) # EUROPÄISCHE PATENTSCHRIFT

(45) Veröffentlichungstag der Patentschrift: **21.06.95**

(51) Int. Cl.$^6$: **C08G 63/64**

(21) Anmeldenummer: **90124513.4**

(22) Anmeldetag: **18.12.90**

(54) **Vernetzte Copolymere auf der Basis von cyclischen Estern und Carbonaten.**

(30) Priorität: **01.03.90 DE 4006401**

(43) Veröffentlichungstag der Anmeldung:
**04.09.91 Patentblatt 91/36**

(45) Bekanntmachung des Hinweises auf die Patenterteilung:
**21.06.95 Patentblatt 95/25**

(84) Benannte Vertragsstaaten:
**DE FR GB IT**

(56) Entgegenhaltungen:
**EP-A- 0 235 741**
**EP-A- 0 274 123**
**EP-A- 0 332 993**

(73) Patentinhaber: **BAYER AG**
**D-51368 Leverkusen (DE)**

(72) Erfinder: **Höcker, Hartwig, Prof. Dr.**
**Am Torbach 23**
**W-5100 Aachen (DE)**
Erfinder: **Keul, Helmut, Dr.**
**Klemensstrasse 9a**
**W-5100 Aachen (DE)**
Erfinder: **Leitz, Edgar, Dr.**
**Goethestrasse 63**
**W-4047 Dormagen 1 (DE)**
Erfinder: **Schön, Norbert, Dr.**
**Wilhelmshofallee 82**
**W-4150 Krefeld (DE)**
Erfinder: **Kühling, Steffen, Dr.**
**Scheiblerstrasse 83**
**W-4150 Krefeld (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft vernetzte Copolymere auf der Basis von cyclischen aliphatischen Estern und cyclischen aliphatischen Carbonaten sowie ein Verfahren zu ihrer Herstellung.

In DE-A-37 00 193 sind sequenziert aufgebaute Copolymere aus cyclischen aliphatischen Carbonaten und Estern beschrieben. Sie eignen sich z.B. für die Herstellung von Folien, die ausgewogene physikalische Eigenschaften (Härte, Zugfestigkeit, Reißdehnung) aufweisen. Ihre Dimensionsstabilität ist jedoch nur bei Temperaturen bis 80 °C gewährleistet. Die Copolymeren können auch als Additive für ABS-Polymerisate (DE-OS 38 08 844) und für Polycarbonat/ABS-Blends (DE-OS 38 08 840) verwendet werden und als polymere Weichmacher für Vinylchlorid-Polymerisate (DE-A-38 08 842).

Gegenstand dieser Erfindung sind vernetzte Copolymere hergestellt aus

A) 5 bis 99,5 Gew.-%, bezogen auf A + B, bevorzugt 15 bis 99 Gew.-%, besonders bevorzugt 30 bis 98 Gew.-%, cyclischen aliphatischen Estern und

B) 0,5 bis 95 Gew.-%, bezogen auf A + B, bevorzugt 1 bis 85 Gew.-%, besonders bevorzugt 2 bis 70 Gew.-%, cyclischen Carbonaten, von denen mindestens ein Teil,

B1) bevorzugt 0,5 bis 50 Gew.-%, besonders bevorzugt 0,5 bis 35 Gew.-%, insbesondere 0,5 bis 25 Gew.-%, bezogen auf A + B

cyclische aliphatische Carbonate mit vernetzungsaktiven Seitengruppen sind.

Die cyclischen aliphatischen Carbonate B1 mit vernetzungsaktiven Seitengruppen entsprechen den Formeln (I) oder (II)

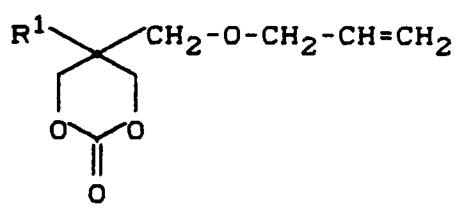

(I)

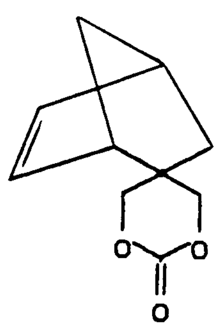

(II)

worin

$R^1$ H oder $C_1$ bis $C_4$-Alkyl, bevorzugt $C_2H_5$ bedeutet.

Daneben können zur Herstellung der erfindungsgemäßen vernetzten Copolymeren cyclische aliphatische Carbonate der Formel (III)

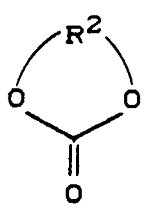

(III)

und/oder der Formel (IV)

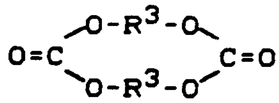 (IV)

verwendet werden.

$R^2$ in Formel (III) bedeutet:

a) $-CH_2CH_2CH(CH_3)-$,

b) $-CH_2CH_2OCH_2CH_2OCH_2CH_2-$,

c) $-CH_2CH(CH_3)CH_2CH_2C(CH_3)_2CH_2-$,

d)

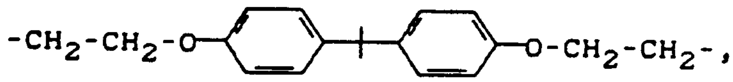

e)

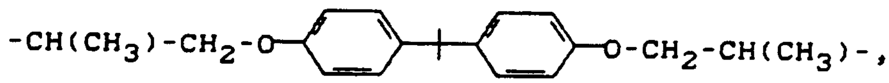

f)

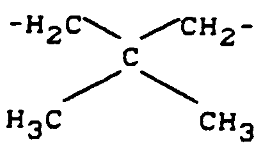

g)

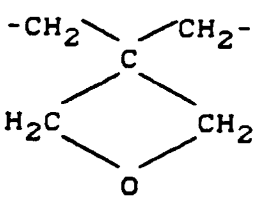

h

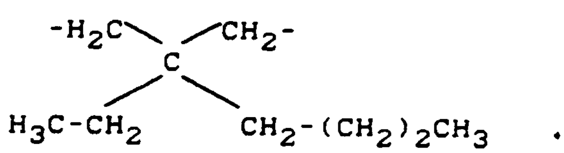

$R^3$ in Formel (IV) ist ein linearer $C_4$-$C_{12}$-Alkylen-Rest oder ein Rest der Formel b) oder der Formel i)

i) $-CH_2-CH_2-O-CH_2-CH_2-$

Besonders bevorzugtes cyclisches aliphatisches Carbonat der Formel (III) ist Neopentylglykolcarbonat.

Für die Herstellung der erfindungsgemäßen vernetzten Copolymeren geeignete cyclische aliphatische Ester entsprechen der Formel V

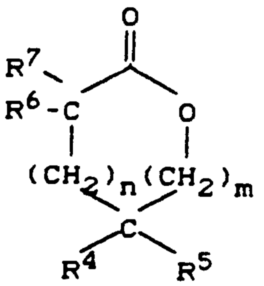

(V)

worin

$R^4$, $R^5$, $R^6$ und $R^7$ gleich oder verschieden sind und H, $C_1$-$C_6$-Alkyl, $C_3$-$C_6$-Alkylen, $C_1$-$C_6$-Alkoxy und $C_2$-$C_6$-Alkenoxy-$C_1$-$C_6$-alkyl, vorzugsweise H, $CH_3$ und $C_2H_5$ bedeuten und m un n unabhängig voneinander 0, 1, 2, 3, 4, 5 oder 6.

Besonders bevorzugter cyclischer aliphatischer Ester der Formel (V) ist ε-Caprolacton.

Die mittleren Molekulargewichte ($\overline{M}_w$) der Copolymeren betragen vor der Vernetzung 5.000 bis 500.000 g/mol, vorzugsweise 15.000 bis 400.000 g/mol.

Ein weiterer Gegenstand der Erfindung ist ein Verfahren zur Herstellung der vernetzten Copolymeren.

Hierzu polymerisiert man ein Gemisch aus einem cyclischen aliphatischen Ester der Formel (V), einem cyclischen aliphatischen Carbonat mit vernetzungsaktiver Seitengruppe der Formeln (I) und/oder (II) und gegebenenfalls einem cyclischen aliphatischen Carbonat der Formeln (III) und/oder (IV) in einem aprotischen organischen Lösungsmittel unter Inertgas (Luft- und Feuchtigkeitsausschluß) mit einer alkalimetallorganischen Verbindung als Initiator bei Temperaturen von +50 °C bis -100 °C, vorzugsweise +20 °C bis -30 °C, bei einem Monomer/Lösungsmittel-Gewichtsverhältnis von 5:100 bis 35:100, vorzugsweise 10:100 bis 25:100 und desaktiviert danach die polymerisationsaktiven Zentren.

Besonders geeignete Initiatoren sind Arylalkalimetall- und Alkylalkalimetallverbindungen sowie Alkoholate der Alkalimetalle, bevorzugt n-Butyllithium, s-Butyllithium, Phenyllithium, Cumylkalium, Naphthalinkalium, Naphthalinnatrium, Kalium-tert.-butylat.

Besonders bevorzugt sind n-Butyl- und s-Butyllithium.

Geeignete aprotische organische Lösungsmittel sind cyclische Ether, aromatische oder aliphatische Kohlenwasserstoffe und Mischungen aus cyclischen Ethern und aromatischen oder aliphatischen Kohlenwasserstoffen. Bevorzugte Lösungsmittel sind Tetrahydrofuran, Tetrahydropyran, Dioxan, Toluol und Benzol.

Besonders bevorzugt sind Toluol und Tetrahydrofuran.

Nach der Polymerisation werden die polymerisationsaktiven Zentren desaktiviert, z.B. mit protischen Verbindungen, wie Wasser, Alkoholen, Säuren oder Mischungen daraus. Bevorzugte Desaktivatoren sind Mischungen aus Methanol und Salzsäure sowie aus Methanol und Phosphorsäure.

Die Copolymeren können in die erfindungsgemäßen vernetzten Copolymeren mit Radikalspendern wie organischen und anorganischen Peroxiden in Schmelze oder in Lösung bei Temperaturen von +80 °C bis +250 °C, vorzugsweise in Schmelze bei +100 °C bis +200 °C umgewandelt werden.

Geeignete Radikalspender sind Peroxide wie

Diacylperoxide (Dibenzoylperoxid, Dilauroylperoxid, Didecanoylperoxid),

Peroxidicarbonate (Dicyclohexyl-peroxi-dicarbonat, Di-(4-tert.-butyl-cyclohexyl)peroxi-dicarbonat, Dicetylperoxi-dicarbonat),

Alkylperester (tert.-Butyl-peroxi-benzoat, 2,5-Dimethyl-2,5-di(benzoyl-peroxi)hexan, tert.-Butyl-peroxi-(3,5,5-trimethylhexanoat), tert.-Butyl-mono-peroxi-maleat, tert.-Butyl-peroxi-2-ethyl-hexanoat, tert.-Butyl-peroxi-perpivalat, tert.-Amyl-peroxi-pivalat),

Perketale (1,1-Di-(tert.-butyl-peroxi)3,3,5-trimethylcyclohexan, 1,1-Di-(tert.-butyl-peroxi)cyclohexan, 2,2-Di-(tert.-butyl-peroxi)butan),

Dialkylperoxide (tert.-Butyl-cumyl-peroxid, 1,3-Di(tert.-butyl-peroxi-isopropyl)benzol, 2,5-Dimethyl-2,5-di(tert.-butyl-peroxi)hexan, Di(tert.-butyl)peroxid),

Alkylhydroperoxide (Cumol-hydroperoxid, tert.-Butyl-hydro-peroxid, tert.-Amyl-hydroperoxid),

anorganische Peroxide (Ammonium-peroxodisulfat, Natrium-peroxodisulfat, Kalium-peroxodisulfat).

Besonders geeignet sind Peroxide mit einer Zerfalls-Halbwertzeit bei 80 °C von ≧ 10 Stunden. Beispiele hierfür sind tert.-Butyl-peroxi(3,5,5-trimethyl-hexanoat), tert.-Butyl-peroxi-benzoat, 1,1-Di(tert.-butyl-peroxi)-cyclohexan, 2,2-Di(tert.-butyl-peroxi)butan, tert.-Butyl-cumyl-peroxid, 2,5-Dimethyl-2,5-di(tert.-butyl-peroxi)-hexan, Di(tert.-Butyl)peroxid, Cumol-hydroperoxid und tert.-Butyl-hydroperoxid.

Die für die Vernetzung notwendigen Mengen an Radikalspender betragen 0,05 Gew.-% bis 10 Gew.-%, vorzugsweise 0,2 Gew.-% bis 6 Gew.-%, bezogen auf (A) + (B).

Die Vernetzung ist auch durch Sauerstoff als Radikalspender oder durch Vulkanisation der Copolymeren durch Schwefel oder Schwefelverbindungen wie Dischwefeldichlorid gegebenenfalls unter Zusatz von Vulkanisationsbeschleunigern wie Zinkoxid, 2-Mercaptobenzthiazol, Tetramethylthiuramdisulfid möglich.

Die Radikalspender können in die Copolymeren durch Mischen mit einer Lösung der Copolymeren und anschließendes Entfernen des Lösungsmittels unter schonenden Bedingungen (niedrige Temperaturen, Vakuum) eingearbeitet werden oder vorzugsweise durch Mischen der aus der Lösung isolierten Copolymeren mit den Radikalspendern in üblichen Innenmischern oder auf Walzen bei Temperaturen bis 60 °C.

Die Copolymeren können vor ihrer Vernetzung in fester Form gewonnen werden, z.B. durch Ausfällen mit Alkoholen, Filtrieren und anschließende Trocknung oder durch direktes Eindampfen der Copolymerlösung z.B. in Schneckenextrudern oder Dünnschichtverdampfern.

Die Copolymeren eignen sich zur Herstellung von vernetzten, weichen Folien mit guter Dehnbarkeit und Alterungsbeständigkeit nach üblichen Verfahren wie Kalandrieren oder Tiefziehen.

Beispiele

Herstellung der Copolymeren mit vernetzungsaktivem Carbonat

Zu einer Lösung von Neopentylglykolcarbonat (NPC), $\epsilon$-Caprolacton (ECL) und 2-Allyloxymethylen-2-ethyl-trimethylencarbonat (AETMC) in 6,6 l Toluol wurden bei 15 °C 15 ml n-Butyllithium-Lösung (2,5 molar in Cyclohexan) gegeben. Während einer Polymerisationszeit von 90 min wurde eine maximale Temperatur von ca. 25 °C erreicht. Das Reaktionsgemisch wurde dann mit 50 ml einer Mischung aus 1 molarer Phosphorsäure und Methanol im Volumenverhältnis 1:1 desaktiviert und das Copolymere durch Fällung in 10 l Methanol, Filtration und Trocknung bei 30 °C im Vakuumtrockenschrank isoliert.

In der Tabelle 1 sind die eingesetzten Monomermengen, die Produktausbeuten sowie die relativen Viskositäten ($\eta_{rel}$) (2 gew.-%ige Lösung in $CH_2Cl_2$, 20 °C) der Copolymeren zusammengefaßt.

Tabelle 1

| Beispiel | | A | B | C |
|---|---|---|---|---|
| NPC | (g) | 475 | 450 | 400 |
| ECL | (g) | 475 | 450 | 400 |
| AETMC | (g) | 50 | 100 | 200 |
| Ausbeute | (g) | 990 | 920 | 900 |
| $\eta_{rel}$ | | 2,35 | 2,30 | 2,0 |

Herstellung eines Copolymeren ohne vernetzungsaktives Carbonat
(Vergleichsbeispiel D)

Zu einer Lösung von 900 g Neopentylglykolcarbonat (NPC) und 900 g $\epsilon$-Caprolacton (ECL) in 10 l Toluol wurden bei 15 °C 10 ml n-Butyllithium-Lösung (2,5 molar in Cyclohexan) gegeben. Während einer Polymerisationszeit von 60 min wurde eine maximale Temperatur von 24 °C erreicht. Das Reaktionsgemisch wurde dann mit 100 ml einer Mischung aus 1 molarer Phosphorsäure und Methanol (im Volumenverhältnis 1:1) desaktiviert und das Copolymere durch Fällung in 20 l Methanol, Filtration und Trocknung bei 50 °C im Vakuumtrockenschrank isoliert. Ausbeute: 1740 g, $\eta_{rel}$: 6,1

Vernetzung der Copolymeren

2,5-Dimethyl-2,5-di(tert.-butyl-peroxi)hexan wurde über eine Walze bei 30-40 °C in die Copolymeren eingearbeitet. Die Vernetzung erfolgte in einer Presse bei 160 °C und 200 bar, wobei Preßplatten der Abmessung 100 x 100 x 2 mm hergestellt wurden. Die Preßdauer betrug 25 min.

Bestimmung der Glastemperatur

Die Glastemperatur der vernetzten Copolymeren wurden mit einem Differentialkalorimeter (DSC 7, Perkin Elmer) bestimmt. Jede Probe wurde hierbei unter Stickstoff zweimal von -80 bis +200 °C mit einer Heizrate von 20 °C/min aufgeheizt. Nach der ersten Aufheizung wurde die Probe im Kalorimeter mit 40 °C/min auf -80 °C abgekühlt. Gemessen wurde bei der zweiten Aufheizung.

Bestimmung der Löslichkeit

Es wurde jeweils 1 g der vernetzten Copolymeren mit 30 ml $CH_2Cl_2$ versetzt. Nach 72 h wurden die unlöslichen Anteile abfiltriert, die Lösung wurde eingeengt und die Menge der löslichen Anteile durch Auswiegen des Rückstandes bestimmt.

Mechanisch-dynamische-Analyse

Zur Bestimmung der Speichermoduli G', Glas- und Schmelztemperaturen durch Schubmodulmessung wurde ein Rheometrick Dynamic Spektrometer (RDS 7700, Rheometric) (Meßfrequenz: 1 Hz) verwendet. Gemessen wurde an S2-Stäben, die aus den Preßplatten gewonnen wurden.

Thermomechanische Analyse

Die thermomechanischen Analysen wurden mit einem TMS-1 von Perkin Elmer durchgeführt. Jede Probe (Preßplatte, Dicke: 2 mm) wurde von -100 °C bis +350 °C mit einer Heizrate von 5 °C/min unter einer Drucklast von 0,2 N und unter Stickstoff als Schutzgas aufgeheizt. Die Dimensionsstabilität der Materialien wurde über die relative Dicke ($d/d_o$) der Proben in Abhängigkeit der Meßtemperatur bestimmt.

In den Tabellen 2 und 3 sind die Glastemperaturen $T_g$, die Schmelztemperaturen $T_m$, die Löslichkeit und die Ergebnisse aus den mechanisch-dynamischen und thermomechanischen Untersuchungen zusammengefaßt.

Tabelle 2

| Beispiele | Peroxidgehalt (Gew.-Teile) | Löslichkeit (%) | $T_g$ (°C) | $T_m$ (°C) |
|---|---|---|---|---|
| A-2 | 1 | < 2 | -36 | - |
| A-3 | 3 | < 2 | -36* | - |
| A-4 | 6 | < 2 | -29 | - |
| B-2 | 1 | 8 | -28 | - |
| B-3 | 3 | < 2 | -30* | - |
| B-4 | 6 | < 2 | -28 | - |
| C-2 | 1 | 4 | -21 | - |
| C-3 | 3 | < 2 | -23* | - |
| C-4 | 6 | < 2 | -20 | - |
| Vergleichsbeispiele | | | | |
| A-1 | 0 | 56 | -40 | - |
| B-1 | 0 | 32 | -34 | - |
| C-1 | 0 | 21 | -33 | - |
| D-1 | 0 | 87 | -37 | - |
| D-2 | 1 | 30 | -40 | 36 |
| D-3 | 3 | 14 | -37* | 35* |
| D-4 | 6 | 5 | -39 | 35* |

* $T_g$ Und $T_m$ über DSC-Methode bestimmt.

Tabelle 3

| Beispiele | G`(+20° C)/G`(-150° C) ($x\ 10^{-4}$) | $d/d_o$ (bei 100° C) | $d/d_o$ (bei 250° C) |
|---|---|---|---|
| A-2 | 6,7 | 1,0 | 1,04 |
| A-4 | 9,3 | 1,0 | 1,04 |
| B-2 | 11,0 | 1,0 | 1,04 |
| B-4 | 13,0 | 1,0 | 1,03 |
| C-2 | 16,7 | 1,0 | 1,02 |
| C-4 | 16,3 | 1,0 | 1,02 |
| Vergleichs-beispiele | | | |
| A-1 | 4,0 | 0,1 | 0,07 |
| B-1 | 7,2 | 0,52 | 0,48 |
| C-1 | 5,4 | 0,65 | 0,66 |
| D-1 | - | 0 | 0 |
| D-2 | - | 0,63 | 0 |

Die Ergebnisse aus Tab. 3 zeigen, daß die erfindungsgemäßen vernetzten Copolymeren gegenüber den unvernetzten eine deutlich bessere Dimensionsstabilität aufweisen.

**Patentansprüche**

1. Vernetzte Copolymere hergestellt aus
   A) 5 bis 99,5 Gew.-% cyclischen aliphatischen Estern und
   B) 0,5 bis 95 Gew.-% cyclischen aliphatischen Carbonaten, von denen mindestens ein Teil,
   B1) cyclische aliphatische Carbonate mit vernetzungsaktiven Seitengruppen sind.

2. Vernetzte Copolymere nach Anspruch 1, in denen (B1) 0,5 bis 50 Gew. % bezogen auf A und B ausmacht.

3. Vernetzte Copolymere gemäß Anspruch 1, hergestellt aus cyclischen aliphatischen Carbonaten mit vernetzungsaktiven Seitengruppen B1 entsprechend den Formeln I und/oder II

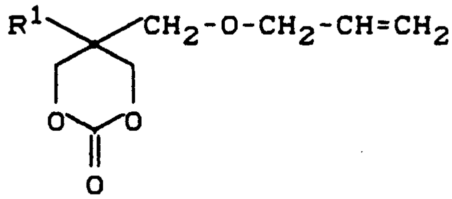

(I)

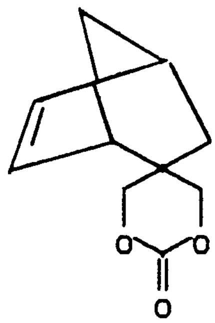

(II)

worin
$R^1$ H oder $C_1$ bis $C_4$-Alkyl bedeutet.

4. Vernetzte Copolymere gemäß Anspruch 1, hergestellt aus
   A) ε-Caprolacton,
   B) Neopentylglykolcarbonat und
   B1) der Verbindung der Formel (I) mit $R^1$ gleich $C_2H_5$.

5. Vernetzte Copolymere gemäß Anspruch 1, hergestellt aus
   A) ε-Caprolacton,
   B) Neopentylglykolcarbonat und
   B1) der Verbindung der Formel (II).

6. Verfahren zur Herstellung der vernetzten Copolymeren gemäß Anspruch 1, dadurch gekennzeichnet, daß man die cyclischen aliphatischen Ester A) und die cyclischen aliphatischen Carbonate B) in einem aprotischen Lösungsmittel bei Temperaturen von -100 °C bis +50 °C polymerisiert, gegebenenfalls das Copolymere isoliert und bei Temperaturen von +80 °C bis +250 °C in der Schmelze unter Verwendung von Radikalspendern vernetzt.

7. Verfahren zur Herstellung der vernetzten Copolymeren gemäß Anspruch 6, dadurch gekennzeichnet, daß als Radikalspender organische oder anorganische Peroxide in Mengen von 0,05 Gew.-% bis 10 Gew.-%, bezogen auf A + B verwendet werden.

## Claims

1. Crosslinked copolymers produced from
   A) 5 to 99.5% by weight of cyclic aliphatic esters and
   B) 0.5 to 95% by weight of cyclic aliphatic carbonates, of which at least part
   B1) are cyclic aliphatic carbonates containing crosslinking-active side groups.

2. Crosslinked copolymers as claimed in claim 1, in which (B1) makes up 0.5 to 50% by weight, based on A) and B).

3. Crosslinked copolymers as claimed in claim 1 produced from cyclic aliphatic carbonates containing crosslinking-active side groups B1 corresponding to formulae I and/or II:

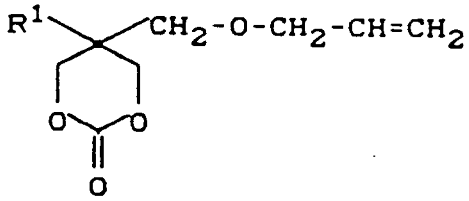

(I)

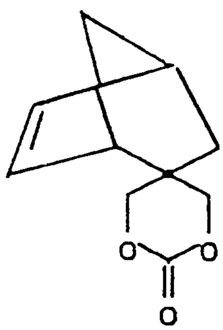

(II)

in which
$R^1$ is H or $C_{1-4}$ alkyl.

4. Crosslinked copolymers as claimed in claim 1, produced from
   A) ε-caprolactone,
   B) neopentyl glycol carbonate and
   B1) the compound corresponding to formula (I) in which $R^1$ is $C_2H_5$.

5. Crosslinked copolymers as claimed in claim 1 produced from
   A) ε-caprolactone,
   B) neopentyl glycol carbonate and
   B1) the compound corresponding to formula (II).

6. A process for the production of the crosslinked copolymers claimed in claim 1, characterized in that the cyclic aliphatic esters A) and the cyclic aliphatic carbonates B) are polymerized in an aprotic solvent at temperatures of -100 °C to +50 °C, the copolymer is optionally isolated and then crosslinked in the melt at temperatures of +80 °C to +250 °C using radical donors.

7. A process for the production of the crosslinked copolymers as claimed in claim 6, characterized in that organic or inorganic peroxides are used as the radical donors in quantities of 0.05% by weight to 10% by weight, based on A) + B).

## Revendications

1. Copolymères réticulés, préparés à partir de
   A) 5 à 99,5 % en poids d'esters aliphatiques cycliques, et
   B) 0,5 à 95 % en poids de carbonates aliphatiques cycliques, dont au moins une partie
   B1) est constituée par des carbonates aliphatiques cycliques comportant des groupes latéraux à activité de réticulation.

2. Copolymères réticulés selon la revendication 1, dans lesquels la fraction (B1) représente 0,5 à 50 % en poids, par rapport à A et B.

3. Copolymères réticulés selon la revendication 1, préparés à partir de carbonates aliphatiques cycliques comportant des groupes latéraux à activité de réticulation, B1, répondant aux formules I et/ou II

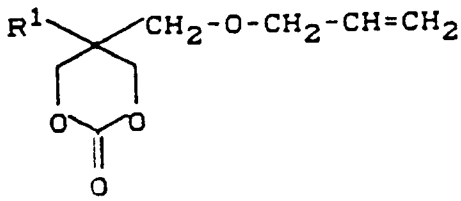

(I)

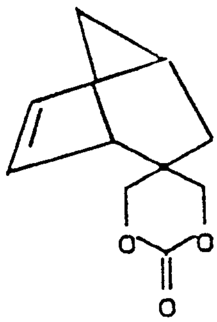

(II)

dans lesquelles
$R^1$ représente H ou un reste alkyle en $C_1$-$C_4$,

4. Copolymères réticulés selon la revendication 1, préparés à partir de :
   A) l'ε-caprolactone,
   B) le carbonate de néopentylglycol, et
   B1 le composé de formule (I) dans laquelle $R^1$ représente $C_2H_5$.

5. Copolymères réticulés selon la revendication 1, préparés à partir de :
   A) l'ε-caprolactone,
   B) le carbonate de néopentylglycol, et
   B1) le composé de formule (II).

6. Procédé de préparation de copolymères réticulés selon la revendication 1, caractérisé en ce qu'on soumet à polymérisation les esters aliphatiques cycliques (A) et les carbonates aliphatiques cycliques (B) dans un solvant aprotique à des températures de -100 °C jusqu'à +50 °C, on isole éventuellement les copolymères et on les soumet à réticulation à des températures de +80 °C à +250 °C en masse fondue, avec utilisation de fournisseurs de radicaux libres.

7. Procédé de préparation des copolymères réticulés selon la revendication 6, caractérisé en ce qu'on utilise comme fournisseurs de radicaux libres des peroxydes organiques ou minéraux, pris en des quantités de 0,05 % en poids à 10% en poids, par rapport à A + B.